# EUROPEAN PATENT APPLICATION

(11) **EP 4 521 212 A1**
(43) Date of publication of application: **12.03.2025**
(21) Application number: 23923674.8
(22) Date of filing: 15.09.2023
(51) Int. Cl.: G06F 3/023

(54) **MULTI-PERSON COOPERATIVE INPUT METHOD, APPARATUS AND SYSTEM BASED ON INPUT METHOD**

(30) Priority: 20.02.2023 CN 202310182631
(71) Applicant: Baidu International Technology (Shenzhen) Co., Ltd, Shenzhen, Guangdong 518000 (CN)
(72) Inventor: YANG, Yijian, Shenzhen, Guangdong 518000 (CN)
(74) Representative: V.O.
(86) International application number: PCT/CN2023/118966
(87) International publication number: WO 2024/174509

(57) **Abstract**

The present disclosure relates to the technical field of Internet applications, and in particular to the field of online editing. Provided are a multi-person cooperative input method, apparatus and system based on an input method. A specific implementation solution involves: in response to receiving a multi-person simultaneous editing request, acquiring document content from a target program; generating a session identifier for connecting to an input method server, and feeding same back to a target terminal; in response to detecting that a terminal of another user is connected to the input method server by means of the session identifier, sending the document content to an input method display interface of the terminal of the another user; in response to receiving document content updated by any terminal by means of an input method, synchronizing the updated document content to input method display interfaces of all terminals which are connected to the input method server by means of the session identifier; and sending the updated document content to the target terminal, such that the target terminal synchronizes the updated document content to the target program. By means of the embodiment, collaborative input can be realized at any target program of a target terminal.

## Description

### CROSS-REFERENCE TO RELATED APPLICATIONS

The present application claims the priority of Chinese Patent Application No. 202310182631.9, titled "MULTI-PERSON COOPERATIVE INPUT METHOD, APPARATUS AND SYSTEM BASED ON INPUT METHOD", filed on February 20, 2023, the content of which is incorporated herein by reference in its entirety.

### TECHNICAL FIELD

The present disclosure relates to the technical field of Internet applications, in particular to the field of online editing, and specifically, a multi-person cooperative input method, apparatus and system based on an input method.

### BACKGROUND

In daily work and life, it is often necessary that multiple persons write and modify a document simultaneously, with each person responsible for writing different modules. However, commonly used input target programs often do not support online simultaneous editing by multiple persons, such as Word office software, or chat applications like WeChat.

In the existing technology, typically, a third-party online document platform is used for cooperative input, and final edited results are copied and input into a target application. Relying on a third-party online cooperation platform for input is not highly universal. If the third-party online cooperation platform is not the target application, it is necessary to copy the edited input results into the target application in the end, and the operation is cumbersome.

### SUMMARY

The present disclosure provides a multi-person cooperative input method and apparatus based on an input method, a device, a storage medium, and a computer program product.

According to a first aspect of the present disclosure, a multi-person cooperative input method based on an input method is provided, applied to an input method server, including: acquiring, in response to receiving a multi-person simultaneous editing request triggered by a target user by means of an input method used in a target program of a target terminal, document content from the target program; generating a session identifier for connecting to the input method server, and feeding the session identifier back to the target terminal, for the target user to share the session identifier to terminals of other users; sending, in response to detecting that a terminal of another user is connected to the input method server by means of the session identifier, the document content to an input method display interface of the terminal of the another user; synchronizing, in response to receiving document content updated by any terminal by means of the input method, the updated document content to input method display interfaces of all terminals which are connected to the input method server by means of the session identifier; and sending the updated document content to the target terminal, such that the target terminal synchronizes the updated document content to the target program.

According to a second aspect of the present disclosure, a multi-person cooperative input method based on an input method is provided, applied to a terminal, including: sending, in response to detecting that a target user enables a multi-person simultaneous editing function of an input method in a target program, a multi-person simultaneous editing request to an input method server; sending document content in the target program to the input method server; receiving a session identifier sent by the input method server; forwarding the session identifier to terminals of other users chosen by the target user; receiving document content edited by the other users sent by the input method server; and synchronizing the edited document content to the target program.

According to a third aspect of the present disclosure, a multi-person cooperative input apparatus based on an input method is provided, applied to an input method server, including: an acquisition unit, configured to acquire, in response to receiving a multi-person simultaneous editing request triggered by a target user by means of an input method used in a target program of a target terminal, document content from the target program; a generation unit, configured to generate a session identifier for connecting to the input method server, and feed the session identifier back to the target terminal, for the target user to share the session identifier to terminals of other users; a sending unit, configured to send, in response to detecting that a terminal of another user is connected to the input method server by means of the session identifier, the document content to an input method display interface of the terminal of the another user; a merging unit, configured to synchronize, in response to receiving document content updated by any terminal by means of the input method, the updated document content to input method display interfaces of all terminals which are connected to the input method server by means of the session identifier; and a synchronization unit, configured to send the updated document content to the target terminal, such that the target terminal synchronizes the updated document content to the target program.

According to a fourth aspect of the present disclosure, a multi-person cooperative input apparatus based on an input method is provided, applied to a terminal, including: a requesting unit, configured to send, in response to detecting that a target user enables a multi-person simultaneous editing function of an input method in a target program, a multi-person simultaneous editing request to an input method server; a sending unit, configured to send document content in the target program to the input method server; a first receiving unit, configured to receive a session identifier sent by the input method server; a forwarding unit, configured to forward the session identifier to terminals of other users chosen by the target user; a second receiving unit, configured to receive document content edited by the other users sent by the input method server; and a synchronization unit, configured to synchronize the edited document content to the target program.

According to a fifth aspect of the present disclosure, a multi-person cooperative input system based on an input method is provided, including: an input method server, configured to perform the method provided by the first aspect; and at least two terminals, any one of the at least two terminals configured to perform the method provided by the second aspect.

According to a sixth aspect of the present disclosure, embodiments of the present disclosure provide an electronic device, comprising: one or more processors; and a memory, storing one or more programs, wherein the one or more programs, when executed by the one or more processors, cause the one or more processors to implement the method provided by the first aspect and the second aspect.

According to a seventh aspect of the present disclosure, embodiments of the present disclosure provide a computer-readable medium, storing a computer program thereon, wherein the program, when executed by a processor, causes the processor to implement the method provided by the first aspect and the second aspect.

According to a eighth aspect of the present disclosure, embodiments of the present disclosure provides a computer program product, comprising a computer program, wherein the computer program, when executed by a processor, implements the method provided by the first aspect and the second aspect.

The multi-person cooperative input method, apparatus and system based on an input method provided in embodiments of the present disclosure, allow multiple input terminals to perform an editing operation by means of the input method, modify text content saved in the input method server in real time, and then input the updated text content into the target program by means of the input method of the target terminal, thereby implementing a multi-person simultaneous input capability. The core idea of the present disclosure is to provide a cloud-based multi-person cooperative capability, using the input method as a bridge to implement multi-person simultaneous input to the target program.

It should be understood that the content described in this section is neither intended to identify key or important features of the embodiments of the present disclosure, nor intended to limit the scope of the present disclosure. Other features of the present disclosure will become understandable through the following description.

### BRIEF DESCRIPTION OF THE DRAWINGS

The accompanying drawings are used for a better understanding of the present solution and do not constitute a limitation to the present disclosure. In which:
FIG. 1 is an exemplary system architecture diagram to which an embodiment of the present disclosure may be applied;
FIG. 2 is a flowchart of an embodiment of a multi-person cooperative input method based on an input method according to the present disclosure;
FIG. 3 is a flowchart of another embodiment of a multi-person cooperative input method based on an input method according to the present disclosure;
FIGS. 4a-4b is a schematic diagram of an application scenario of the multi-person cooperative input method based on an input method according to the present disclosure;
FIG. 5 is a schematic structural diagram of an embodiment of a multi-person cooperative input apparatus based on an input method according to the present disclosure;
FIG. 6 is a schematic structural diagram of another embodiment of a multi-person cooperative input apparatus based on an input method according to the present disclosure; and
FIG. 7 is a schematic structural diagram of a computer system of an electronic device suitable for implementing embodiments of the present disclosure.

### DETAILED DESCRIPTION OF EMBODIMENTS

Exemplary embodiments of the present disclosure are described below in combination with the accompanying drawings, and various details of the embodiments of the present disclosure are included in the description to facilitate understanding, and should be considered as exemplary only. Accordingly, it should be recognized by one of ordinary skilled in the art that various changes and modifications may be made to the embodiments described herein without departing from the scope and spirit of the present disclosure. Also, for clarity and conciseness, descriptions for well-known functions and structures are omitted in the following description.

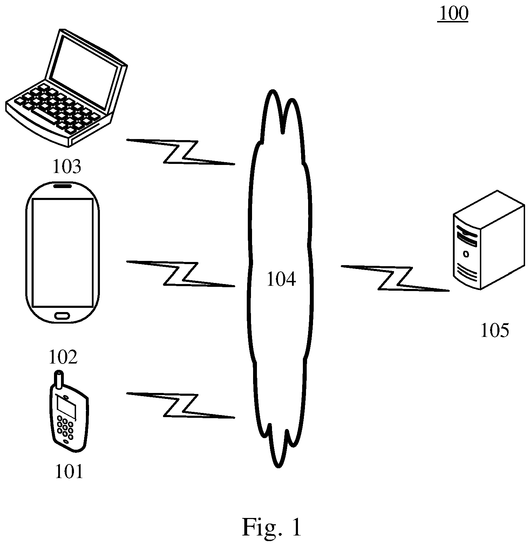

FIG. 1 illustrates an exemplary system architecture 100 to which embodiments of a multi-person cooperative input method based on an input method or a multi-person cooperative input apparatus based on an input method of the present disclosure may be applied.

As shown in FIG. 1, the system architecture 100 may include terminals 101, 102, 103, a network 104, and an input method server 105. The network 104 serves as a medium providing a communication link between the terminals 101, 102, 103 and the server 105. The network 104 may include various types of connections, such as wired or wireless communication links, or optical cables.

Users may use the terminals 101, 102, 103 to interact with the server 105 via the network 104 to receive or send messages or the like. Various communication client applications may be installed on the terminals 101, 102, 103, such as input methods, document editing tools, office software, web browser applications, shopping applications, search applications, instant messaging tools, email clients, or social platform software.

The terminals 101, 102, 103 may be hardware or software. When the terminals 101, 102, 103 are hardware, they may be various electronic devices having display screens and supporting text input, including but not limited to smartphones, tablets, e-book readers, MP3 players (Moving Picture Experts Group Audio Layer III), MP4 (Moving Picture Experts Group Audio Layer IV) players, laptops and desktop computers, or the like. When the terminals 101, 102, 103 are software, they may be installed in the electronic devices listed above. The terminals may be implemented as multiple software or software modules (e.g., for providing distributed services), or as a single software or software module, which is not limited herein.

The input method server 105 may be a server that provides various services, such as a server that provides support for an input method running on the terminals 101, 102, 103, for example, by providing functions such as a thesaurus. The input method server may process (e.g., analyze) received data such as multi-person simultaneous editing requests, or document content, and feedback processing results (e.g., multi-person edited document content) to the terminals.

It should be noted that the input method server may be hardware or software. When the input method server is hardware, it may be implemented as a distributed server cluster consisting of multiple servers, or as a single server. When the input method server is software, it may be implemented as multiple software or software modules (e.g., multiple software or software modules for providing distributed services), or as a single software or software module, which is not limited herein. The input method server may also be a server of a distributed system or a server incorporating a blockchain. The input method server may also be a cloud server, or a smart cloud computing server or a smart cloud host with artificial intelligence technology.

It should be noted that the multi-person cooperative input method based on an input method provided by embodiments of the present disclosure may be performed by the terminals 101, 102, 103, or by the input method server 105. Accordingly, the multi-person cooperative input apparatus based on an input method may be provided in the terminals 101, 102, 103, or may be provided in the input method server 105, which is not limited herein.

It should be understood that the numbers of terminals, networks and servers in FIG. 1 are only illustrative. According to the implementation needs, there may be any number of terminals, networks and servers.

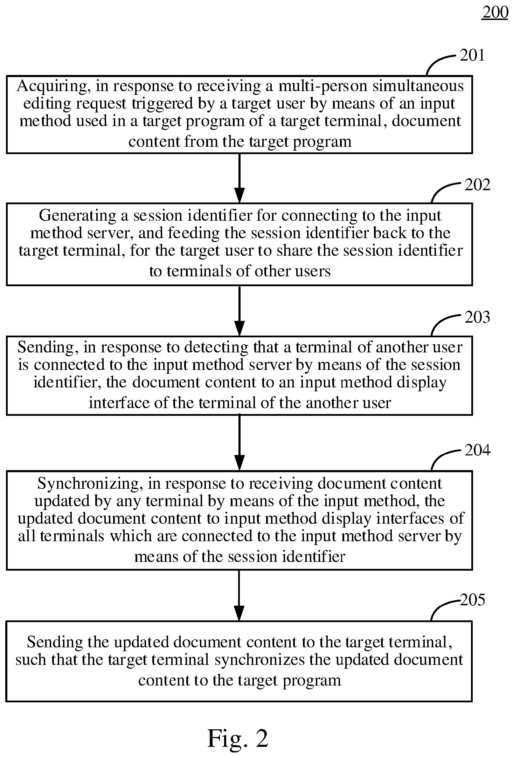

With further reference to FIG. 2, illustrating a flow 200 of an embodiment of a multi-person cooperative input method based on an input method according to the present disclosure. The multi-person cooperative input method based on an input method is applied to an input method server, and includes the following steps:

Step 201, acquiring, in response to receiving a multi-person simultaneous editing request triggered by a target user by means of an input method used in a target program of a target terminal, document content from the target program.

In the present embodiment, an executing body of the multi-person cooperative input method based on an input method (e.g., the input method server of a predetermined input method shown in FIG. 1) may be connected to each terminal on which a predetermined input method program (hereinafter referred to as "input method") has been installed through a wired or wireless means. The input method supports a multi-person simultaneous editing function. When users use this input method in the target program (such as Word, Excel, or WeChat), the multi-person simultaneous editing function may be enabled, in this regard, the input method may send the document content from the target program to the input method server. Since multiple persons are editing simultaneously, an initiator of this multi-person simultaneous editing is referred to herein as the target user, a terminal used by the initiator is referred to as the target terminal, and a program in which the document content resides is referred to as the target program. The document content may include not only strings but also some emojis. The acquired document content is stored in the input method server, and while session connection remains active, may be stored in a memory. When the session ends (i.e., the target user disables the multi-person simultaneous editing function of the input method), the document content in the memory may be transferred to a hard disk, for download by the target user and other users, and then relevant data of the session may be cleared from the memory.

Step 202, generating a session identifier for connecting to the input method server, and feeding the session identifier back to the target terminal, for the target user to share the session identifier to terminals of other users.

In the present embodiment, each time the target user enables the multi-person simultaneous editing function of the input method, it may be considered as a session, and when the function is disabled, the session is closed. For each session, the input method server may allocate a unique session identifier. The session identifier may be a link in the form of a string or a QR code. By clicking on the string link or scanning the QR code, one may connect to the input method server, and access the document content corresponding to the session identifier.

The input method server may feed the session identifier back to the terminal, and the session identifier may be displayed on an input method interface of the terminal. The target user may forward the session identifier to the terminals of other users designated by himself who participate in document editing.

Step 203, sending, in response to detecting that a terminal of another user is connected to the input method server by means of the session identifier, the document content to an input method display interface of the terminal of the another user.

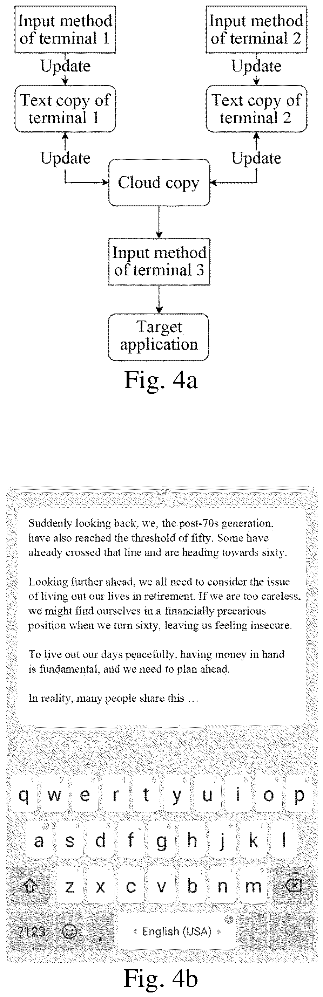

In the present embodiment, when the other user connects to the input method server by means of the session identifier on the input method interface, the multi-person simultaneous editing function of the input method is enabled, and the input method server may send the document content to the input method display interface of the terminal of the another user. As shown in FIG. 4b, in this way, the input method display interface of each terminal connected to the input method server by means of the session identifier shows the same document content.

Step 204, synchronizing, in response to receiving document content updated by any terminal by means of the input method, the updated document content to input method display interfaces of all terminals which are connected to the input method server by means of the session identifier.

In the present embodiment, each user participating in multi-person simultaneous editing by means of the session identifier is able to add, modify, or delete the document content synchronized from the input method server on the input method interface of his or her own terminal. Editing operations on the input method interfaces are all sent to the input method server and then synchronized to other user terminals participating in the multi-person simultaneous editing.

Step 205, sending the updated document content to the target terminal, such that the target terminal synchronizes the updated document content to the target program.

In the present embodiment, any modification made by anyone is synchronized to the target terminal of the initiator, and may not only be displayed on the input method display interface, but also replace the content in the target program. The replacement operation on the terminal is automatically completed by the input method, without the need for manual copying.

The method provided in the above embodiment of the present disclosure, allows multiple input terminals to perform an editing operation by means of the input method, modify text content saved in the cloud in real time, and then input the updated text content into the target program by means of the input method of the target terminal, thereby implementing a multi-person simultaneous input capability.

In some alternative implementations of the present embodiment, the method further includes: using most recently updated document content, if different terminals conflict with each other in editing the document content. Conflict problems in the editing process may be quickly resolved.

In some alternative implementations of the present embodiment, the method further includes: presetting, by the target user, priorities for other users who participate in editing; and using the document content edited by a user having the highest priority, if different terminals conflict with each other in editing the document content. Low-priority users cannot modify content input by high-priority users, while high-priority users may modify content input by low-priority users. The priority may be set based on information such as the quality of text edited by the user, or a position. In this way, it may prevent originally correct content from being modified incorrectly.

In some alternative implementations of the present embodiment, the method further includes: adding a revision record including a user identifier to the updated document content, for the target user to choose to accept or reject a revision. A revision mode may be set to facilitate review, and the target user may accept a modification or reject a revision, similar to the existing revision mode in Word. It is also possible to choose to accept all revisions from a certain user, or to choose to reject all revisions from a certain user. In this way, the revised document content may be quickly reviewed.

In some alternative implementations of the present embodiment, the method further includes: counting the number of times of rejected revisions for each user based on the user identifier; and lowering the priority of a user whose number of times of rejected revisions is greater than a predetermined threshold. Each revision to a paragraph of words is counted as one time, and the number of revised paragraphs rejected for each user is counted as the number of times of rejected revisions. If the number of times of rejected revisions is too high, it indicates that the quality of revision of the user is poor, and the priority of the user should be lowered to prevent him from modifying content written by other users with high revision quality.

In some alternative implementations of the present embodiment, the session identifier is a QR code. The QR code contains session-related information and links to the input method server. The QR code is easy to forward, and one may directly connect to the input method server by scanning the QR code.

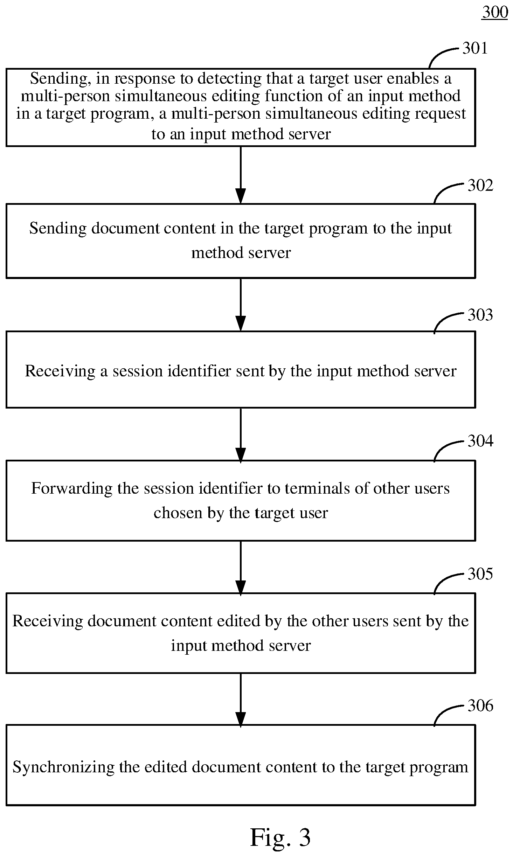

With further reference to FIG. 3, illustrating a flow 300 of another embodiment of a multi-person cooperative input method based on an input method. The flow 300 of the multi-person cooperative input method based on an input method includes the following steps:
Step 301, sending, in response to detecting that a target user enables a multi-person simultaneous editing function of an input method in a target program, a multi-person simultaneous editing request to an input method server.

In the present embodiment, an executing body of the multi-person cooperative input method based on an input method (e.g., the terminal shown in FIG. 1) installs a predetermined input method. The user may enable the multi-person simultaneous editing function of the input method and send the multi-person simultaneous editing request to the input method server, and the input method server may prepare a memory space for storing document content for this session.

Step 302, sending document content in the target program to the input method server.

In the present embodiment, the input method may collect the document content in the target program and send the document content to the input method server. The input method may collect not only strings, but also expressions, tables and other information.

Step 303, receiving a session identifier sent by the input method server.

In the present embodiment, the input method server may allocate a unique session identifier for this enabled multi-person simultaneous editing function, and then send the session identifier to the input method of the target terminal. Each session identifier corresponds to a section of memory, for storing the document content involved in the session.

Step 304, forwarding the session identifier to terminals of other users chosen by the target user.

In the present embodiment, the target user may choose which users to forward the session identifier to, and the chosen users are users who participate in editing. For example, the session identifier is forwarded via WeChat, and users who receive the session identifier may connect to the input method server by scanning the code, etc., then an input method display interface of the local terminal may display the document content that needs to be collaboratively edited.

Step 305, receiving document content edited by the other users sent by the input method server.

In the present embodiment, the input method server may collect and merge the document content edited by all users, then send the document content to all terminals connected to the input method server based on the session identifier, and display the document content on the input method display interfaces of the terminals.

Step 306, synchronizing the edited document content to the target program.

In the present embodiment, the input method may automatically copy the edited document content to the target program without manual copying.

In some alternative implementations of the present embodiment, the method further includes: connecting to the input method server by means of the session identifier; displaying the document content sent by the input method server on an input method display interface; and sending, in response to detecting an editing operation on the document content, the edited document content to the input method server. The terminal may be used not only as a terminal for initiating joint editing, but also as a terminal for editing text content.

With further reference to FIGS. 4a-4b, FIGS. 4a-4b is a schematic diagram of an application scenario of the multi-person cooperative input method based on the input method according to the present embodiment. In the application scenario of FIGS. 4a-4b, terminal 3 is a target terminal, a target user uses terminal 3 to open a multi-person simultaneous editing function of an input method in a target application, and wants to invite user 1 of terminal 1 and user 2 of terminal 2 to participate in editing. Specific steps are as follows:
Step 1: after the target program invokes the input method, the target user enabling a multi-person simultaneous input function of the input method, and the input method generating a unique session identifier in a cloud server;
Step 2: terminal 1 and terminal 2 respectively invoking the input method and establishing a connection with the cloud server by means of the session identifier.
Step 3: after terminal 1 is connected to the server, synchronously displaying text content of the current input method server (text saved in the cloud) in an area above the input method. After user 1 inputs content by means of the input method of terminal 1, the input method transmits the updated content to the input method server, and the input method server simultaneously updates all input method programs connected to itself. For example, the input method of terminal 1 inputs "aaa", after updating this content to the cloud server, the input method of terminal 1 and the input method of terminal 2 both display the content "aaa". Similarly, after the input method of terminal 2 updates the content to "aaabbb", the input method of terminal 1 and the input method of terminal 2 both display the content "aaabbb".
Step 4: after receiving the updated content from the server, the input method of terminal 3 synchronizing the updated content to the target program.

A visual interface is provided above the input method for editing a text copy in the current terminal, as shown in FIG. 4b.

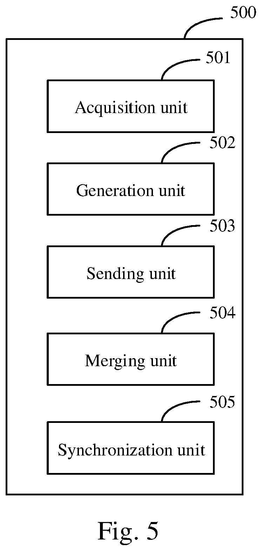

With further reference to FIG. 5, as an implementation of the method shown in the above figures, the present disclosure provides an embodiment of a multi-person cooperative input apparatus based on an input method. The embodiment of the apparatus corresponds to the embodiment of the method shown in FIG. 2. The apparatus may be applied to various electronic devices.

As shown in FIG. 5, the multi-person cooperative input apparatus 500 based on an input method in the present embodiment includes: an acquisition unit 501, a generation unit 502, a sending unit 503, a merging unit 504 and a synchronization unit 505. Here, the acquisition unit 501 is configured to acquire, in response to receiving a multi-person simultaneous editing request triggered by a target user by means of an input method used in a target program of a target terminal, document content from the target program. The generation unit 502 is configured to generate a session identifier for connecting to the input method server, and feed the session identifier back to the target terminal, for the target user to share the session identifier to terminals of other users. The sending unit 503 is configured to send, in response to detecting that a terminal of another user is connected to the input method server by means of the session identifier, the document content to an input method display interface of the terminal of the another user. The merging unit 504 is configured to synchronize, in response to receiving document content updated by any terminal by means of the input method, the updated document content to input method display interfaces of all terminals which are connected to the input method server by means of the session identifier. The synchronization unit 505 is configured to send the updated document content to the target terminal, such that the target terminal synchronizes the updated document content to the target program.

In the present embodiment, specific processing of the acquisition unit 501, the generation unit 502, the sending unit 503, the merging unit 504 and the synchronization unit 505 of the multi-person cooperative input apparatus 500 based on an input method may be referred to in step 201, step 202, step 203, step 204, and step 205 in the corresponding embodiment of FIG. 2.

In some alternative implementations of the present embodiment, the merging unit 504 is further configured to: use most recently updated document content, if different terminals conflict with each other in editing the document content.

In some alternative implementations of the present embodiment, the merging unit 504 is further configured to: preset, by the target user, priorities for other users who participate in editing; and use the document content edited by a user having the highest priority, if different terminals conflict with each other in editing the document content.

In some alternative implementations of the present embodiment, the apparatus 500 further includes a recording unit (not shown in the figure), configured to: add a revision record including a user identifier to the updated document content, for the target user to choose to accept or reject a revision.

In some alternative implementations of the present embodiment, the recording unit is further configured to: count the number of times of rejected revisions for each user based on the user identifier; and lower the priority of a user whose number of times of rejected revisions is greater than a predetermined threshold.

In some alternative implementations of the present embodiment, the session identifier is a QR code.

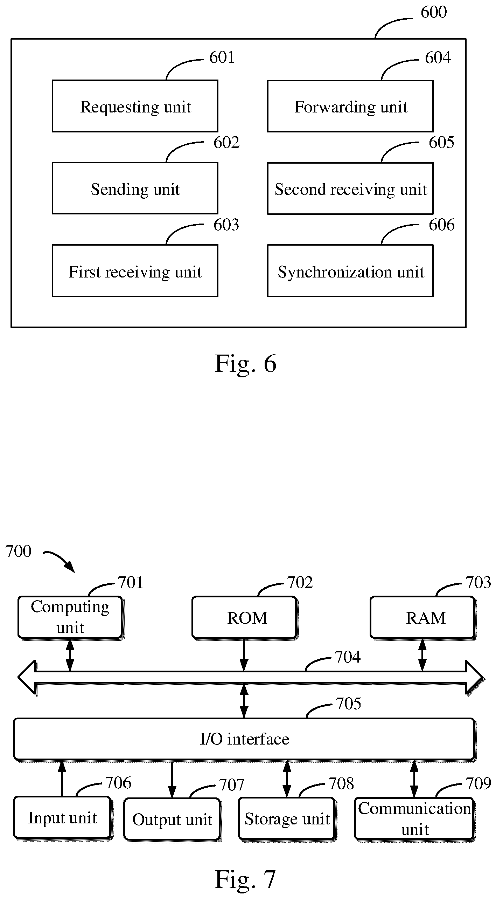

With further reference to FIG. 6, as an implementation of the method shown in the above figures, the present disclosure provides an embodiment of a multi-person cooperative input apparatus based on an input method. The embodiment of the apparatus corresponds to the embodiment of the method shown in FIG. 3. The apparatus may be applied to various electronic devices.

As shown in FIG. 6, the multi-person cooperative input apparatus 600 based on an input method in the present embodiment includes: a requesting unit 601, a sending unit 602, a first receiving unit 603, a forwarding unit 604, a second receiving unit 605 and a synchronization unit 606. Here, the requesting unit 601 is configured to send, in response to detecting that a target user enables a multi-person simultaneous editing function of an input method in a target program, a multi-person simultaneous editing request to an input method server. The sending unit 602 is configured to send document content in the target program to the input method server. The first receiving unit 603 is configured to receive a session identifier sent by the input method server. The forwarding unit 604 is configured to forward the session identifier to terminals of other users chosen by the target user. The second receiving unit 605 is configured to receive document content edited by the other users sent by the input method server. The synchronization unit 606 is configured to synchronize the edited document content to the target program.

In the present embodiment, specific processing of the requesting unit 601, the sending unit 602, the first receiving unit 603, the forwarding unit 604, the second receiving unit 605 and the synchronization unit 606 of the multi-person cooperative input apparatus 600 based on an input method may be referred to in steps 301-306 in the corresponding embodiment of FIG. 3.

In some alternative implementations of the present embodiment, the apparatus 600 further includes an editing unit (not shown in the figure), configured to: connect to the input method server by means of the session identifier; display the document content sent by the input method server on an input method display interface; and send, in response to detecting an editing operation on the document content, the edited document content to the input method server.

In the technical solution of the present disclosure, the collection, storage, use, processing, transmission, provision, disclosure, etc. of the personal information of a user involved all comply with the provisions of the relevant laws and regulations, and do not violate public order and good customs.

According to an embodiment of the present disclosure, the present disclosure further provides an electronic device, a readable storage medium and a computer program product.

An electronic device, including: at least one processor; and a memory in communication connection with the at least one processor. Here, the memory stores instructions executable by the at least one processor, and the instructions are executed by the at least one processor, to enable the at least one processor to perform the method described in flow 200 or 300.

A non-transitory computer readable storage medium storing computer instructions. Here, the computer instructions are used to cause the computer to perform the method described in flow 200 or 300.

A computer program product, including a computer program, the computer program, when executed by a processor, implements the method described in flow 200 or 300.

Fig. 7 illustrates a schematic block diagram of an exemplary electronic device 600 that can be used to implement embodiments of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processing, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 7, the device 700 includes a computation unit 701, which may execute various appropriate actions and processes in accordance with a computer program stored in a read-only memory (ROM) 702 or a computer program loaded into a random access memory (RAM) 703 from a storage unit 708. The RAM 703 also stores various programs and data required by operations of the device 700. The computation unit 701, the ROM 702 and the RAM 703 are connected to each other through a bus 704. An input/output (I/O) interface 705 is also connected to the bus 704.

The following components in the device 700 are connected to the I/O interface 705: an input unit 706, for example, a keyboard and a mouse; an output unit 707, for example, various types of displays and a speaker; a storage device 708, for example, a magnetic disk and an optical disk; and a communication unit 709, for example, a network card, a modem, a wireless communication transceiver. The communication unit 709 allows the device 700 to exchange information/data with an other device through a computer network such as the Internet and/or various telecommunication networks.

The computation unit 701 may be various general-purpose and/or special-purpose processing assemblies having processing and computing capabilities. Some examples of the computation unit 701 include, but not limited to, a central processing unit (CPU), a graphics processing unit (GPU), various dedicated artificial intelligence (AI) computing chips, various processors that run a machine learning model algorithm, a digital signal processor (DSP), any appropriate processor, controller and microcontroller, etc. The computation unit 701 performs the various methods and processes described above, for example, the multi-person cooperative input method based on an input method. For example, in some embodiments, the multi-person cooperative input method based on an input method may be implemented as a computer software program, which is tangibly included in a machine readable medium, for example, the storage device 708. In some embodiments, part or all of the computer program may be loaded into and/or installed on the device 700 via the ROM 702 and/or the communication unit 709. When the computer program is loaded into the RAM 703 and executed by the computation unit 701, one or more steps of the above multi-person cooperative input method based on an input method may be performed. Alternatively, in other embodiments, the computation unit 701 may be configured to perform the multi-person cooperative input method based on an input method through any other appropriate approach (e.g., by means of firmware).

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may include: being implemented in one or more computer programs, where the one or more computer programs may be executed and/or interpreted on a programmable system including at least one programmable processor, and the programmable processor may be a particular-purpose or general-purpose programmable processor, which may receive data and instructions from a storage system, at least one input device and at least one output device, and send the data and instructions to the storage system, the at least one input device and the at least one output device.

Program codes used to implement the method of embodiments of the present disclosure may be written in any combination of one or more programming languages. These program codes may be provided to a processor or controller of a general-purpose computer, particular-purpose computer or other programmable data processing apparatus, so that the program codes, when executed by the processor or the controller, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the present disclosure, the machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any appropriate combination thereof. A more particular example of the machine-readable storage medium may include an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other. The server may be a cloud server, a distributed system server, or a server combined with a blockchain.

It should be appreciated that the steps of reordering, adding or deleting may be executed using the various forms shown above. For example, the steps described in embodiments of the present disclosure may be executed in parallel or sequentially or in a different order, so long as the expected results of the technical schemas provided in embodiments of the present disclosure may be realized, and no limitation is imposed herein.

The above particular implementations are not intended to limit the scope of the present disclosure. It should be appreciated by those skilled in the art that various modifications, combinations, sub-combinations, and substitutions may be made depending on design requirements and other factors. Any modification, equivalent and modification that fall within the spirit and principles of the present disclosure are intended to be included within the scope of the present disclosure.

## Claims

1. A multi-person cooperative input method based on an input method, applied to an input method server, comprising:
acquiring, in response to receiving a multi-person simultaneous editing request triggered by a target user by means of an input method used in a target program of a target terminal, document content from the target program;
generating a session identifier for connecting to the input method server, and feeding the session identifier back to the target terminal, for the target user to share the session identifier to terminals of other users;
sending, in response to detecting that a terminal of another user is connected to the input method server by means of the session identifier, the document content to an input method display interface of the terminal of the another user;
synchronizing, in response to receiving document content updated by any terminal by means of the input method, the updated document content to input method display interfaces of all terminals which are connected to the input method server by means of the session identifier; and
sending the updated document content to the target terminal, such that the target terminal synchronizes the updated document content to the target program.

2. The method according to claim 1, wherein the method further comprises:
using most recently updated document content, if different terminals conflict with each other in editing the document content.

3. The method according to claim 1, wherein the method further comprises:
presetting, by the target user, priorities for other users who participate in editing; and
using the document content edited by a user having a highest priority, if different terminals conflict with each other in editing the document content.

4. The method according to claim 1, wherein the method further comprises:
adding a revision record comprising a user identifier to the updated document content, for the target user to choose to accept or reject a revision.

5. The method according to claim 4, wherein the method further comprises:
counting a number of times of rejected revisions for each user based on the user identifier; and
lowering a priority of a user whose number of times of rejected revisions is greater than a predetermined threshold.

6. The method according to claim 1, wherein the session identifier is a QR code.

7. A multi-person cooperative input method based on an input method, applied to a terminal, comprising:
Sending, in response to detecting that a target user enables a multi-person simultaneous editing function of an input method in a target program, a multi-person simultaneous editing request to an input method server;
sending document content in the target program to the input method server;
receiving a session identifier sent by the input method server;
forwarding the session identifier to terminals of other users chosen by the target user;
receiving document content edited by the other users sent by the input method server; and
synchronizing the edited document content to the target program.

8. The method according to claim 7, wherein the method further comprises:
connecting to the input method server by means of the session identifier;
displaying the document content sent by the input method server on an input method display interface; and
sending, in response to detecting an editing operation on the document content, the edited document content to the input method server.

9. A multi-person cooperative input apparatus based on an input method, applied to an input method server, comprising:
an acquisition unit, configured to acquire, in response to receiving a multi-person simultaneous editing request triggered by a target user by means of an input method used in a target program of a target terminal, document content from the target program;
a generation unit, configured to generate a session identifier for connecting to the input method server, and feed the session identifier back to the target terminal, for the target user to share the session identifier to terminals of other users;
a sending unit, configured to send, in response to detecting that a terminal of another user is connected to the input method server by means of the session identifier, the document content to an input method display interface of the terminal of the another user;
a merging unit, configured to synchronize, in response to receiving document content updated by any terminal by means of the input method, the updated document content to input method display interfaces of all terminals which are connected to the input method server by means of the session identifier; and
a synchronization unit, configured to send the updated document content to the target terminal, such that the target terminal synchronizes the updated document content to the target program.

10. The apparatus according to claim 9, wherein the merging unit is further configured to:
use most recently updated document content, if different terminals conflict with each other in editing the document content.

11. The apparatus according to claim 9, wherein the merging unit is further configured to:
preset, by the target user, priorities for other users who participate in editing; and
use the document content edited by a user having a highest priority, if different terminals conflict with each other in editing the document content.

12. The apparatus according to claim 9, wherein the apparatus further comprises a recording unit, configured to:
add a revision record comprising a user identifier to the updated document content, for the target user to choose to accept or reject a revision.

13. The apparatus according to claim 12, wherein the recording unit is further configured to:
count a number of times of rejected revisions for each user based on the user identifier; and
lower a priority of a user whose number of times of rejected revisions is greater than a predetermined threshold.

14. The apparatus according to claim 9, wherein the session identifier is a QR code.

15. A multi-person cooperative input apparatus based on an input method, applied to a terminal, comprising:
a requesting unit, configured to send, in response to detecting that a target user enables a multi-person simultaneous editing function of an input method in a target program, a multi-person simultaneous editing request to an input method server;
a sending unit, configured to send document content in the target program to the input method server;
a first receiving unit, configured to receive a session identifier sent by the input method server;
a forwarding unit, configured to forward the session identifier to terminals of other users chosen by the target user;
a second receiving unit, configured to receive document content edited by the other users sent by the input method server; and
a synchronization unit, configured to synchronize the edited document content to the target program.

16. The apparatus according to claim 15, wherein the apparatus further comprises an editing unit, configured to:
connect to the input method server by means of the session identifier;
display the document content sent by the input method server on an input method display interface; and
send, in response to detecting an editing operation on the document content, the edited document content to the input method server.

17. A multi-person cooperative input system based on an input method, comprising:
an input method server, configured to perform the method according to any one of claims 1-6; and
at least two terminals, any one of the at least two terminals configured to perform the method according to claim 7 or 8.

18. An electronic device, comprising:
at least one processor; and
a memory communicatively connected to the at least one processor; wherein,
the memory stores instructions executable by the at least one processor, the instructions, when being executed by the at least one processor, cause the at least one processor to perform the method according to any one of claims 1-8.

19. A non-transitory computer readable storage medium storing computer instructions, wherein, the computer instructions are used to cause the computer to perform the method according to any one of claims 1-8.

20. A computer program product, comprising a computer program, the computer program, when executed by a processor, implements the method according to any one of claims 1-8.
